# EUROPEAN PATENT SPECIFICATION

(11) **EP 3 237 177 B1**
(45) Date of publication and mention of the grant of the patent: **08.05.2019**
(21) Application number: 15817529.9
(22) Date of filing: 23.12.2015
(51) Int. Cl.: B29C 64/153, B22F 3/105, B33Y 30/00

(54) **ADDITIVE MANUFACTURING APPARATUS**
VORRICHTUNG ZUR GENERATIVEN FERTIGUNG
APPAREIL DE FABRICATION ADDITIVE

(30) Priority: 23.12.2014 GB 201423025
(43) Date of publication of application: 01.11.2017
(73) Proprietor: Renishaw Plc., Wotton-Under-Edge, Gloucestershire GL12 8JR (GB)
(72) Inventor: GREENFIELD, Benjamin, John, Stone Staffordshire ST15 0SH (GB); MUNDAY, Jonathan, Stone Staffordshire ST15 0SH (GB); SUTCLIFFE, Christopher, Stone Staffordshire ST15 0SH (GB)
(74) Representative: Matthews, Paul
(86) International application number: PCT/GB2015/054151
(87) International publication number: WO 2016/102970

(56) References cited:
- EP-A2- 1 839 781
- WO-A1-92/08592
- US-A1- 2004 003 741
- US-A1- 2009 295 039
- US-A1- 2013 101 803
- US-A1- 2014 265 045

## Description

### Field of Invention

This invention concerns additive manufacturing apparatus and methods in which layers of material are consolidated in a layer-by-layer manner to form a part. The invention has particular, but not exclusive application, to selective laser solidification apparatus, such as selective laser melting (SLM) and selective laser sintering (SLS) apparatus.

### Background

Selective laser melting (SLM) and selective laser sintering (SLS) apparatus produce parts through layer-by-layer solidification of a material, such as a metal powder material, using a high energy beam, such as a laser beam. A powder layer is formed across a powder bed in a build chamber by depositing a heap of powder adjacent to the powder bed and spreading the heap of powder with a wiper across (from one side to another side of) the powder bed to form the layer. A laser beam, introduced through a window in the top of the build chamber, is then scanned across areas of the powder layer that correspond to a cross-section of the part being constructed. The laser beam melts or sinters the powder to form a solidified layer. After selective solidification of a layer, the powder bed is lowered by a thickness of the newly solidified layer and a further layer of powder is spread over the surface and solidified, as required. An example of such a device is disclosed in US6042774.

The solidification process is carried out in an inert gas atmosphere, such as an argon or nitrogen atmosphere, as the metal powder is highly reactive. Melting of the powder results in gas-borne particles in the build chamber. These particles include a cloud or fog of nanometre sized particulates formed by material that has resolidified in the inert atmosphere after being vaporised by the laser. It is undesirable for the gas-borne particles to resettle on the powder bed as this can affect the accuracy of the build. To remove such matter a gas knife of inert gas is generated across the powder bed between a nozzle and an exhaust. The gas collected by the exhaust is passed through a filter to remove the gas-borne particles, the filtered gas recirculated through a gas circuit back to the nozzle.

WO2010/007394 discloses a parallel filter arrangement in which the gas flow through the circuit can be switched between either one of two filter assemblies such that the filter element in the other filter assembly can be replaced during a build.

During a build, the gas-borne particulates can collect on surfaces of the build chamber, including the window, forming a soot-like covering. The particulates collected on the window and the gas-borne particulates can deflect and/or disperse the laser beam, resulting in an inaccurate build. It is known to provide a gas curtain across the window to mitigate the problem of particulates gathering on the window. Examples of such gas flow devices are disclosed in EP0785838 and EP1998929.

It has been found, however, that, even with gas flows across the powder bed and the window, sufficient particulates collect on the window to affect the quality of the build.

US2013/0101803A1 discloses the gas of a construction-chamber atmosphere removed by suction and conducted through a tubular component with cooled areas on which the vapours produced during a layer-by-layer production process can condense. The gas is then conducted back into the construction chamber. The gas of the construction-chamber atmosphere is reheated after condensation of the volatile constituents of the polymer before being conducted back into the construction chamber.

US2014/0265045 discloses a scrubber to clean and filter air within a build chamber of a laser sintering system. The scrubber comprises an initial cooling section. The cooling section is a serpentine passage that causes relatively hot air in the build chamber to be cooled, such as with a heat sink or fan assembly in thermal communication with the passages in the cooling section.

US2009/0295039 A1 discloses an apparatus for layerwise manufacturing of a three-dimensional object comprising a container that is open at the top, a support, which is movable in a vertical direction in the container such that the layer of the object to be solidified in each case lies within a working plane. A laser beam is deflected by a deflecting device that is controlled by a control device and is focussed at a predetermined point within the working plane by a focussing device. The focussing device contains a lens module. The lens module includes an exit lens, which is held by the lens mount and through which the laser beam exits the lens module. For the exit lens, which is arranged at the side of the lens module facing the working plane and therefore is exposed to the danger of contamination, a heating element is provided, which is arranged around the rim of the exit lens. By a temperature rise of the exit lens, e.g. up to more than approximately 100°, a contamination of the exit lens by precipitates is lowered.

EP1839781 A2 discloses an assembly for fabricating a product by the application of successive powder layers hardened in situ by a laser beam. The assembly has a process housing around a process chamber with a product buildup zone. The product buildup zone is located on a lift/lower support pad in the process chamber. The lower part of the chamber with the product under formation is separated from the upper chamber by a continual feed of inert gas forming a gas partition that is virtually impenetrable for the smoke and vapor emerging from the laser-heated powder.

US2004/0003741 A1 discloses apparatus for use in three-dimensional printing comprising a first powder bed assembly and positioning system, a second powder bed assembly and positioning system, a roller assembly, a printhead assembly, and an interlayer drying heater assembly. The interlayer dryer heater assembly incorporates twelve heater elements spaced apart from each other and held within a heater housing. The housing is configured to allow cooling air to flow through the housing and around some or all of the heaters, maintaining the interlayer dryer heating assembly at or below a desired temperature.

### Summary of Invention

According to a first aspect of the invention there is provided an additive manufacturing apparatus for building a part by selectively consolidating flowable material in a layer-by-layer building process according to claim 1.

The cooling device may comprise a Peltier device, a heat exchanger through which coolant is pumped, a refrigeration unit and/or other suitable device for cooling a surface.

### Description of the Drawings

**Figure 1** is a schematic diagram of an additive manufacturing apparatus;
**Figure 2** is a schematic diagram of the additive manufacturing apparatus from another side;
**Figure 3** is a schematic diagram of another additive manufacturing apparatus; and
**Figure 4** is a schematic diagram of an additive manufacturing apparatus according to an embodiment of the invention.

### Description of Embodiments

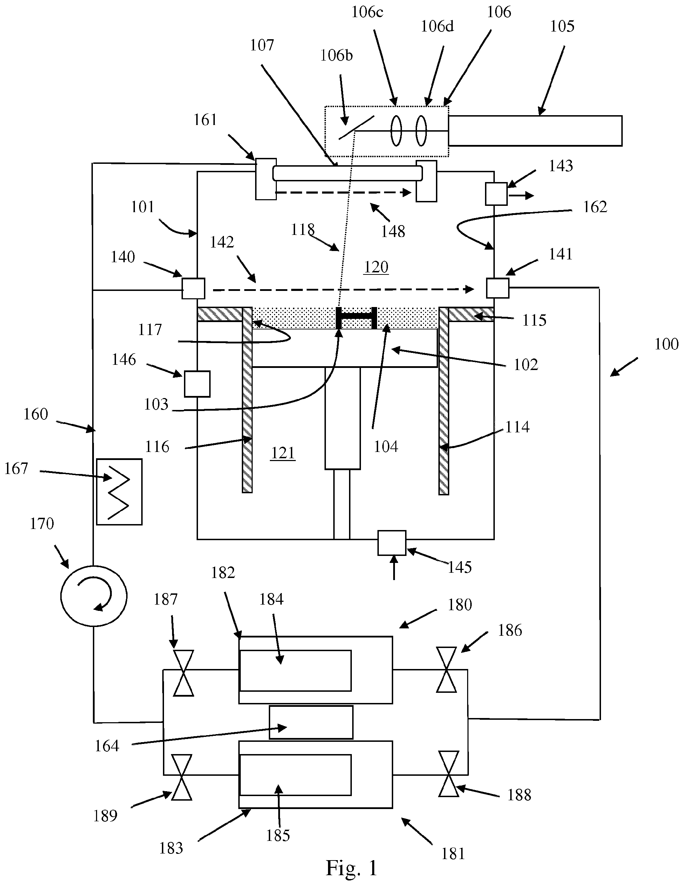

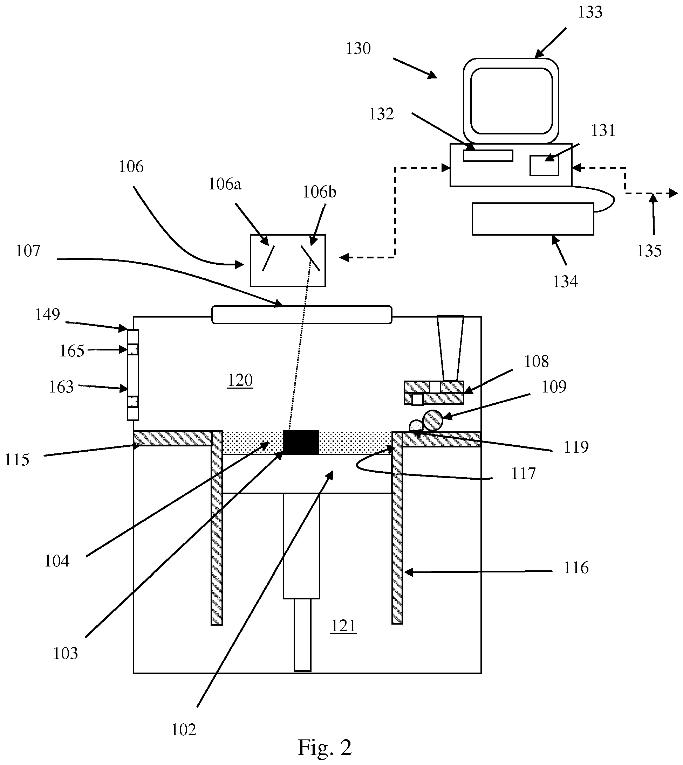

Referring to Figures 1 and 2, an additive manufacturing apparatus of the disclosure comprises an inert gas vessel 100 comprising build chamber 101 and a gas circuit 160.

The build chamber 101 has partitions 115, 116 therein that define a build cylinder 117 and a surface onto which powder can be deposited. A build platform 102 is provided for supporting a part 103 built by selective laser melting powder 104. The platform 102 can be lowered within the build cylinder 117 as successive layers of the part 103 are formed. A build volume available is defined by the extent to which the build platform 102 can be lowered into the build cylinder 117. The build cylinder 117 and build platform 102 may have any suitable cross-sectional shape, such as circular, rectangular and square.

Partitions 115, 116 and the build platform 102 split the build chamber 101 into an upper chamber 120 and a lower chamber 121. Seals (not shown) around the build platform 102 prevent powder from entering into the lower chamber 121. A gas connection, such as a one-way valve, may be provided between the upper and lower chambers 120, 121 to allow gas to flow from the lower chamber 121 to the upper chamber 120. The lower chamber 121 may be kept at a slight over-pressure relative to the upper chamber 120.

Layers of powder 104 are formed as the part 103 is built by dispensing apparatus 108 and an elongate wiper 109. For example, the dispensing apparatus 108 may be apparatus as described in WO2010/007396.

A laser module 105 generates a laser for melting the powder 104, the laser directed as required by optical scanner 106 under the control of a computer 130. The laser enters the chamber 101 via a window 107.

The optical scanner 106 comprises steering optics, in this embodiment, two movable mirrors 106a, 106b for directing the laser beam to the desired location on the powder bed 104 and focussing optics, in this embodiment a pair of movable lenses 106c, 106d, for adjusting a focal length of the laser beam. Motors (not shown) drive movement of the mirrors 106a and lenses 106b, 106c, the motors controlled by processor 131.

A computer 130 controls modules of the additive manufacturing apparatus, including the thermal devices such as the cooling devices and heaters, as described below... Computer 130 comprises the processor unit 131, memory 132, display 133, user input device 134, such as a keyboard, touch screen, etc., a data connection to the modules. Stored on memory 132 is a computer program that instructs the processing unit to carry out the method as now described.

The gas circuit 160 comprises a gas nozzle 140 and a gas exhaust 141 for generating a gas flow 142 through the chamber 101 across the build platform 102. The gas flow 142 acts as a gas knife carrying gas-borne particles created by the melting of the powder with the laser away from the build area. The gas circuit comprises a further gas nozzle integrated into a retainer ring 161 for generating a gas flow 148 across the laser window 107. This gas flow may help to prevent particulates from collecting on the laser window 107, which in turn could affect the quality of the laser beam 118 delivered through the laser window 107.

A pump 170 drives the circulation of inert gas through gas circuit 160.

A vent 143 provides a means for venting/removing gas from the chambers 120, 121. A backfill inlet 145 provides an inlet for backfilling the chambers 120, 121 with inert gas. The lower chamber 121 may comprise a further inlet 146 for maintaining the lower chamber 121 at an overpressure relative to the upper chamber 120.

The gas flow circuit comprises filter assemblies 180, 181 connected in parallel within the gas circuit to filter particulates within the recirculated gas. Each filter assembly 180, 181 comprises a filter housing 182, 183, a filter element 184, 185 located in the filter housing 182, 183 and manually operated valves 186, 187, 188, 189 for opening and closing gas inlet and gas outlet, respectively. Each filter assembly 180, 182 is detachable from the gas circuit for replacement of the filter element 182, 183, as is described in WO2010/026396.

The apparatus comprises thermal devices for affecting the heating and/or cooling of an internal surface of the inert gas vessel 100 to cause particulates to be preferentially deposited at a predetermined location in the vessel 100 desirable for particulate collection.

A first thermal device is a polymer retainer ring 161 for retaining the laser window 107 in place. The polymer material insulates the internal surface of the ring from the colder environment surrounding the build chamber 101. Other internal surfaces of the build chamber 101 are provided with a good thermal coupling to the surrounding environment. For example, walls 162 of the build chamber 101 may be made of material that has good thermal conductivity, such as a metal. Accordingly, during a build, the internal surfaces of the build chamber walls 162 may be cooler than the internal surfaces of the retainer ring 161 and laser window 107 such that particulates preferentially collect on surfaces of the build chamber walls 162 rather than the retainer ring or laser window 107.

Further thermal devices in the form of insulation 165 may also be provided around the inlet nozzle for inert gas and the viewing window 163 in the door 149 to ensure that internal surfaces of the inlet nozzle and viewing window 163 remain at a higher temperature than other internal surfaces of the vessel 100 such that the particulates preferentially deposit on the other internal surfaces.

The gas flow circuit further comprises a thermal device for controlling the temperature of internal surfaces of the gas circuit. In Figures 1 and 2, the thermal device is a cooling device 164 for cooling the filter housings 182, 183. The cooling device 164 is arranged to cool internal surfaces of each housing 182, 183 that are exposed to gas flow that has yet to pass through the filter elements 184, 185. The colder internal surface of the filter housings 182, 183 encourage particulates in this gas flow to be deposited on the internal surfaces of the housings 182, 183. The housings 182, 183 may comprise web like structures (not shown) to provide an increased surface area for the collection of particulates.

The cooling device 164 may be a refrigeration unit for cooling a coolant, which in turn flows through heat exchange conduits to cool the housings 182, 183.

Flooding of the housings 182, 183 with water during changing of the filter element cleans particulates from the internal surfaces of the housing 182, 183. As a result, the internal surfaces of the filter housing 182, 183 are desirable locations in vessel 100 for the deposition of particulates.

The gas circuit may further comprise a heater 167 for heating gas downstream of the filter elements such that the inert gas delivered into the build chamber 101 is close to or above the ambient temperature of the inert gas in the build chamber 101. This may help to prevent the build-up of deposits around the inlet nozzle.

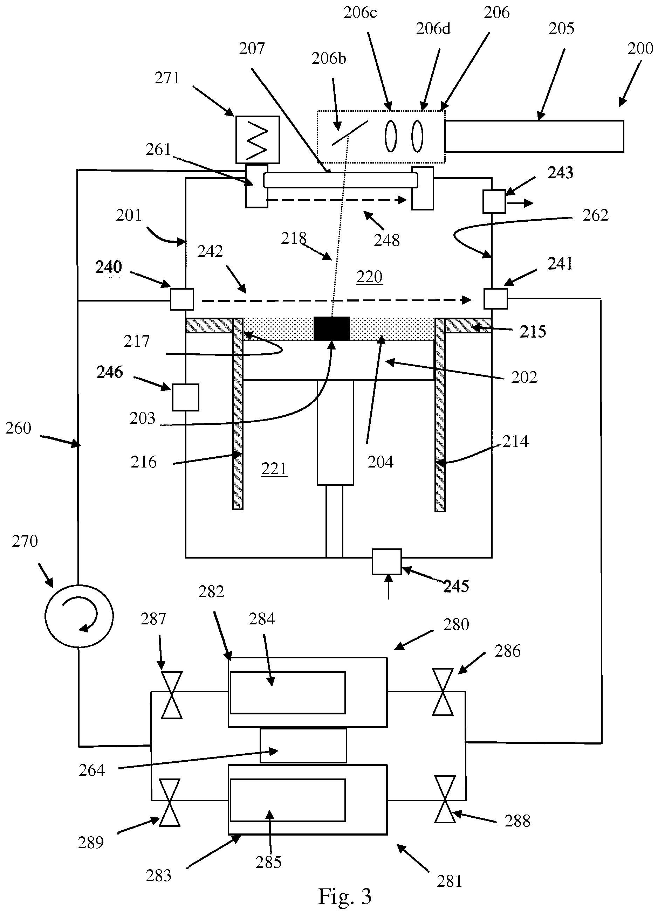

Figure 3 shows another apparatus of the disclosure.

Features of this embodiment that are the same or similar to features of the embodiment described with reference to Figures 1 and 2 have been given the same reference numerals but in the series 200.

The embodiment shown in Figure 3 differs from that shown in Figures 1 and 2 in that the retainer ring 261 is a metal retainer ring thermally coupled to a heater 271. The heater 271 heats the retainer ring 261 such that an internal surface of the retainer ring 261 exposed to the inert gas in the vessel 200 is heated to a temperature above the ambient temperature of the inert gas. Heating of the retainer ring 261 may limit or prevent altogether particulates being deposited on the retainer ring 261 and the laser window 207.

Figure 3 also differs from the embodiment shown in Figures 1 and 2 in that the heater 167 is omitted, such that cooled inert gas is delivered into the build chamber 201.

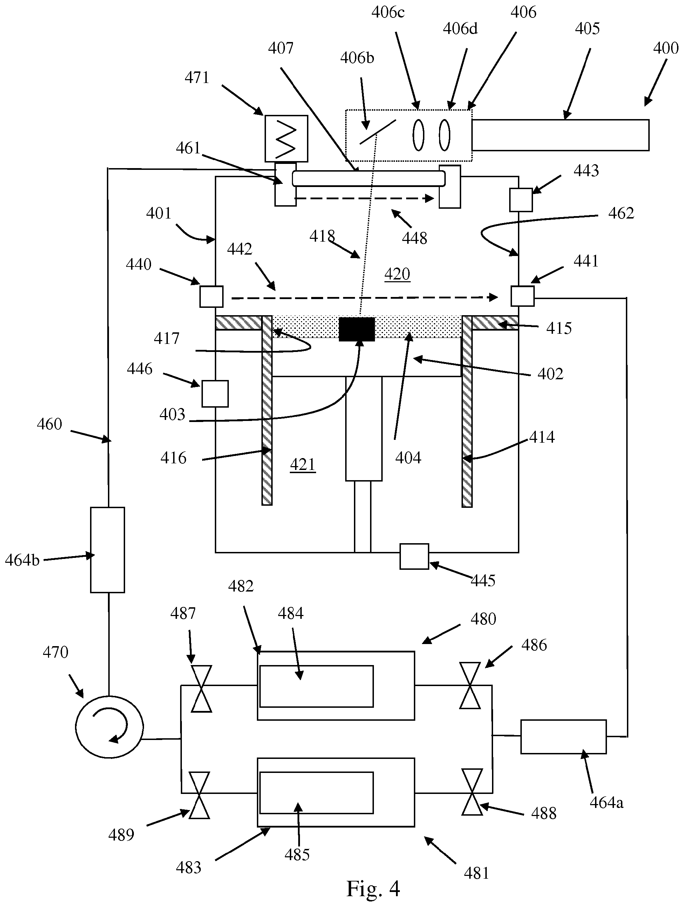

Figure 4 shows another apparatus of the disclosure. Features of this embodiment that are the same or similar to features of the embodiments described with reference to Figures 1 to 3 have been given the same reference numerals but in the series 400. This embodiment differs from the embodiments shown in Figures 1 to 3 in that two cooling devices 464a, 464b are provided, one 464a for cooling and capturing particles before the inert gas enters into the filter assemblies 482, 483 and a second downstream of the pump 470 for cooling gas heated by the pump 470. The cooling devices 464a, 464b defines at least one serpentine passageway for the gas, the walls of the passageway(s) cooled by appropriate means, for example a coolant. Internal surfaces of the passageway may comprise spikes or rods that act as cold fingers or anticontaminators (similar to the devices used in electron microscopy) filled with a coolant. Like the embodiment shown in Figure 3, there is no active heater for heating gas that passes through the gas recirculation loop.

Furthermore, the pump 470 is provided upstream of the cooling device 464b. This may be advantageous as the specifications for the pump 470 are not limited by the need to pass cooled gas therethrough.

In use of any of the above described embodiments, the inert gas may be cooled and passed into the build chamber 101, 201, 401 without being heated by a heater, to cool the gas within the chamber 101 to a temperature below that of internal surfaces of the build chamber 101, 201, 401. (In the first embodiment, the computer 130 may deactivate the heater 167 such that the cooled inert gas passes into the build chamber 101). This may reduce a capacity of the inert gas in the build chamber 101, 201, 401 to hold vaporised material, such a vaporised metal material, produced during the additive building process. Accordingly, less vaporised material will migrate to critical surfaces, such as window 107, 207, 407, which are desirably maintained free of condensate. Furthermore, the metal vapour held within the gas is less likely to condense onto the internal surfaces of the build chamber because the surfaces are at a higher temperature (as the walls of the build chamber are in thermal communication with the external environment which is at a higher temperature) than the temperature of the inert gas. In particular, heater 271, 471 may be used to heat the retainer ring 261, 461 around the window 207, 407 to elevate a temperature of an internal surface of the window 207, 407 above a temperature of the inert gas in the build chamber 201, 401. The cooled gas 142, 242, 442 acts as a cooled gas blanket/curtain thermally isolating critical surfaces, such as the window 107, 207, 407 and viewing window 163 of door 165 from the heated powder bed 104, 204, 404 and solidified material of the object 103, 203, 204.

The gas flows 142, 242, 442 may generate a temperature inversion layer within the build chamber 101, 201, 401 wherein a layer of warmer gas is trapped above the gas flow 142, 242, 442 of the cooled gas. The temperature inversion may act to trap vaporised material below the layer of warm gas where the particulates are removed by the gas knife 142, 242, 442.

The cooled inert gas delivered into the build chamber may be less than 20 degrees and preferably between 0 and 10 degrees.

Furthermore, at the end of the build, cooled inert gas continues to be recirculated/is recirculated to cool the build chamber 101, 201, 401 and the object built using the additive build process. This may reduce the time between the end of the build and when the build chamber and object have cooled sufficiently to allow the build chamber door to be opened and the object removed from the build chamber 101, 201,401.

It will be understood that alterations and modifications may be made to the embodiments as described herein without departing from the invention as defined in the claims.

## Claims

1. An additive manufacturing apparatus for building a part by selectively consolidating flowable material in a layer-by-layer building process comprising an inert gas vessel comprising a build chamber (401), a layering device for depositing layers of material in the build chamber (401); a scanner (406) for delivering an energy beam (418) to selected areas of each layer to consolidate flowable material of the layer, a gas flow circuit (460) for generating an inert gas flow through the build chamber (401), the gas circuit (460) comprising a pump (470) for driving circulation of inert gas through the gas circuit (460) and a cooling device (464b) arranged to cool an internal surface of the gas flow circuit (460) to generate cooled inert gas, **characterised in that** the cooling device (464b) is downstream of the pump (470) such that the cooled inert gas is delivered into the build chamber (401).

2. An additive manufacturing apparatus according to claim 1, wherein the gas flow circuit (460) is arranged to generate a gas curtain (442, 448) of the cooled inert gas across the build chamber (401).

3. An additive manufacturing apparatus according to claim 2, comprising a laser (405) for generating a laser beam (418) and the build chamber (401) comprises a window (407) through which the laser beam (418) is directed by the scanner (406), wherein the gas flow circuit (460) is arranged to generate the gas curtain (442, 448) across the build chamber (401) between the window (407) and the layers of material (404) deposited in the build chamber (401).

4. An additive manufacturing apparatus according to claim 2 or claim 3, wherein the gas circuit (460) comprises a gas nozzle (440) and gas exhaust (441) for generating a gas knife (442) of the cooled inert gas through the build chamber (401) across the build platform (402).

5. An additive manufacturing apparatus according to any one of the preceding claims, wherein the cooling device (464b) comprises a Peltier device, a heat exchanger through which coolant is pumped and/or a refrigeration unit.

6. An additive manufacturing apparatus according to any one of the preceding claims, wherein a temperature of the cooled inert gas delivered into the build chamber (401) is greater than 30 degrees centigrade below a temperature of gas in the build chamber (401).

7. An additive manufacturing apparatus according to any one of the proceeding claims, comprising a computer (130) for controlling modules of the additive manufacturing apparatus including the cooling device (464b) such that, at an end of a build, cooled inert gas is recirculated to cool the build chamber (401) and an object (403) built using the layer-by-layer building process.

## Patentansprüche

1. Additive Fertigungsvorrichtung zum Bauen eines Teils durch selektives Verfestigen von fließfähigem Material in einem schichtweisen Bauprozess, umfassend einen Inertgasbehälter mit einer Baukammer (401), eine Schichteinrichtung zum Ablagern von Materialschichten in der Baukammer (401); einen Scanner (406) zum Zuführen eines Energiestrahls (418) zu ausgewählten Bereichen jeder Schicht, um fließfähiges Material der Schicht zu verfestigen, einen Gasströmungskreis (460) zum Erzeugen einer Inertgasströmung durch die Baukammer (401), wobei der Gaskreis (460) eine Pumpe (470) zum Antreiben einer Umwälzung von Inertgas durch den Gaskreis (460) und eine Kühleinrichtung (464b) umfasst, die zum Kühlen einer inneren Oberfläche des Gasströmungskreises (460) angeordnet ist um gekühltes Inertgas zu erzeugen, **dadurch gekennzeichnet, dass** die Kühleinrichtung (464b) stromabwärts von der Pumpe (470) angeordnet ist, so dass das gekühlte Inertgas in die Baukammer (401) eingeführt wird.

2. Additive Fertigungsvorrichtung nach Anspruch 1, wobei der Gasströmungskreis (460) so angeordnet ist, dass er einen Gasvorhang (442, 448) des gekühlten Inertgases durch die Baukammer (401) hindurch erzeugt.

3. Additive Fertigungsvorrichtung nach Anspruch 2, umfassend einen Laser (405) zum Erzeugen eines Laserstrahls (418), und wobei die Baukammer (401) ein Fenster (407) umfasst, durch das der Laserstrahl (418) von dem Scanner (406) gelenkt wird, wobei der Gasströmungskreis (460) so angeordnet ist, dass er den Gasvorhang (442, 448) durch die Baukammer (401) hindurch zwischen dem Fenster (407) und den in der Baukammer (401) abgelagerten Materialschichten (404) erzeugt.

4. Additive Fertigungsvorrichtung nach Anspruch 2 oder 3, wobei der Gaskreis (460) eine Gasdüse (440) und einen Gasauslass (441) zum Erzeugen eines Gasmessers (442) des gekühlten Inertgases durch die Baukammer (401) über die Bauplatform (402) hinweg umfasst.

5. Additive Fertigungsvorrichtung nach einem der vorhergehenden Ansprüche, wobei die Kühleinrichtung (464b) eine Peltier-Einrichtung, einen Wärmetauscher, durch welchen Kühlmittel gepumpt wird, und/oder eine Kälteeinheit umfasst.

6. Additive Fertigungsvorrichtung nach einem der vorhergehenden Ansprüche, wobei eine Temperatur des in die Baukammer (401) eingeführten gekühlten Inertgases mehr als 30° C unter einer Gastemperatur in der Baukammer (401) liegt.

7. Additive Fertigungsvorrichtung nach einem der vorhergehenden Ansprüche, umfassend einen Computer (130) zum Steuern von Modulen der additiven Fertigungsvorrichtung, einschließlich der Kühleinrichtung (464b), so dass an einem Ende eines Baus gekühltes Inertgas umgewälzt wird, um die Baukammer (401) und ein unter Verwendung des schichtweisen Bauprozesses gebautes Objekt (403) zu kühlen.

## Revendications

1. Appareil de fabrication additive pour construire une pièce en consolidant sélectivement une matière fluide dans un procédé de construction couche par couche comprenant un récipient de gaz inerte qui comprend une chambre de construction (401), un dispositif de disposition en couches pour déposer des couches de matière dans la chambre de construction (401) ; un dispositif de balayage (406) pour envoyer un faisceau d'énergie (418) sur des zones sélectionnées de chaque couche pour consolider la matière fluide de la couche, un circuit d'écoulement de gaz (460) pour générer un écoulement de gaz inerte à travers la chambre de construction (401), le circuit de gaz (460) comprenant une pompe (470) pour entraîner une circulation de gaz inerte à travers le circuit de gaz (460) et un dispositif de refroidissement (464b) agencé pour refroidir une surface interne du circuit d'écoulement de gaz (460) pour générer un gaz inerte refroidi, **caractérisé en ce que** le dispositif de refroidissement (464b) se trouve en aval de la pompe (470) de sorte que le gaz inerte refroidi soit envoyé dans la chambre de construction (401).

2. Appareil de fabrication additive selon la revendication 1, dans lequel le circuit d'écoulement de gaz (460) est agencé pour générer un rideau de gaz (442, 448) du gaz inerte refroidi à travers la chambre de construction (401).

3. Appareil de fabrication additive selon la revendication 2, comprenant un laser (405) pour générer un faisceau laser (418) et la chambre de construction (401) comprend une fenêtre (407) à travers laquelle le faisceau laser (418) est dirigé par le dispositif de balayage (406), où le circuit d'écoulement de gaz (460) est agencé pour générer le rideau de gaz (442, 448) à travers la chambre de construction (401) entre la fenêtre (407) et les couches de matière (404) déposées dans la chambre de construction (401).

4. Appareil de fabrication additive selon la revendication 2 ou 3, dans lequel le circuit de gaz (460) comprend une buse à gaz (440) et un échappement de gaz (441) pour générer une lame à gaz (442) du gaz inerte refroidi à travers la chambre de construction (401) sur la plate-forme de construction (402).

5. Appareil de fabrication additive selon l'une quelconque des revendications précédentes, dans lequel le dispositif de refroidissement (464b) comprend un dispositif à effet Peltier, un échangeur de chaleur à travers lequel un liquide de refroidissement est pompé et/ou une unité de réfrigération.

6. Appareil de fabrication additive selon l'une quelconque des revendications précédentes, dans lequel une température du gaz inerte refroidi envoyé dans la chambre de construction (401) est supérieure à 30 degrés centigrade en dessous d'une température de gaz dans la chambre de construction (401).

7. Appareil de fabrication additive selon l'une quelconque des revendications précédentes, comprenant un ordinateur (130) pour commander des modules de l'appareil de fabrication additive comportant le dispositif de refroidissement (464b) de sorte que, à la fin d'une construction, un gaz inerte refroidi soit remis en circulation pour refroidir la chambre de construction (401) et un objet (403) construit en utilisant le procédé de construction couche par couche.
